# EUROPÄISCHE PATENTANMELDUNG

(11) **EP 2 851 715 A1**
(43) Veröffentlichungstag der Anmeldung: **25.03.2015**
(21) Anmeldenummer: 14176330.0
(22) Anmeldetag: 09.07.2014
(51) Int. Cl.: G02B 3/00, G02B 19/00

(54) **Beleuchtungsvorrichtung und Verfahren zum Erzeugen eines Beleuchtungsfeldes**

(30) Priorität: 14.08.2013 DE 102013108801
(71) Anmelder: SICK AG, 79183 Waldkirch (DE)
(72) Erfinder: Schneider, Dr. Florian, 79276 Reute (DE); Stang, Denise, 79211 Denzlingen (DE)
(74) Vertreter: Ludewigt, Christoph

(57) **Zusammenfassung**

Es wird eine Beleuchtungsvorrichtung (10) zum Erzeugen eines Beleuchtungsfeldes (102) für einen optoelektronischen Sensor (100) angegeben, die mindestens eine Lichtquelle und eine Beleuchtungsoptik aufweist, insbesondere mit einer TIR-Linse, um das Licht der Lichtquelle gezielt in das Beleuchtungsfeld (102) zu führen, wobei die Beleuchtungsoptik (10) einen Lichteintrittsbereich, einen Lichtführungsbereich mit einer Mantelfläche und einen Lichtaustrittsbereich aufweist, so dass das Licht der Lichtquelle in der Beleuchtungsoptik über Totalreflexion an der Mantelfläche von dem Lichteintrittsbereich zu dem Lichtaustrittsbereich geführt wird. Dabei ist der Lichtführungsbereich zumindest teilweise aus einem verformbaren Material ausgebildet, so dass durch Ausüben einer Kraft auf den Lichtführungsbereich die Geometrie der Mantelfläche veränderbar ist.

## Beschreibung

Die Erfindung betrifft eine Beleuchtungsvorrichtung und ein Verfahren zum Erzeugen eines Beleuchtungsfeldes nach dem Oberbegriff von Anspruch 1 beziehungsweise 10.

Für die Inspektion oder Vermessung von Objekten werden häufig Kamerasysteme eingesetzt. Dabei werden Bilder des Objekts erfasst und entsprechend der Aufgabe durch Bildverarbeitungsverfahren ausgewertet. Eine weitere Anwendung von Kameras ist das Lesen von Codes. Derartige kamerabasierte Codeleser lösen die noch weit verbreiteten Barcodescanner zunehmend ab. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

Solche Kamerasysteme benötigen eine Beleuchtung, um die zu inspizierenden oder zu vermessenden Objekte beziehungsweise den zu lesenden Code unabhängig von Umgebungs- oder Fremdlicht erfassen zu können. Als Lichtquellen werden dabei häufig LEDs verwendet. Im Vergleich zu den ebenfalls gelegentlich verwendeten Laserlichtquellen haben LEDs meist eine divergentere Abstrahlcharakteristik und größere Abstrahlflächen. Um deren Licht dennoch gezielt auf das Beleuchtungsfeld zu führen, werden entsprechende Optiken verwendet.

Zur effizienten Projektion des Lichts sind im Stand der Technik sogenannte TIR-Linsen (Total Internal Reflection) bekannt. Eine TIR-Linse weist eine Geometrie auf, die dafür sorgt, dass das eingetretene Licht in hinreichend flachem Winkel auf die Seitenflächen fällt, um die für das Linsenmaterial geltenden Bedingungen für Totalreflexion zu erfüllen. Dadurch wird das Licht ähnlich wie in einem Lichtleiter geführt. Zusätzlich zu der bloßen Lichtweiterleitung hat aber aufgrund der Geometrie der TIR-Linse und insbesondere ihrer Mantelfläche das austretende Lichtbündel eine gewünschte Strahlform. TIR-Linsen werden beispielsweise in einem Spritzgussprozess hergestellt und mit einer LED-Lichtquelle zu einer Beleuchtung assembliert.

Die anfangs genannten Kamerasysteme werden in einer großen Variantenvielfalt gebraucht, die sich in der Auflösung des Bildsensors, aber auch in Sichtfeld und Arbeitsabstand differenzieren. Für eine effiziente Beleuchtung muss jeweils eine passende TIR-Linse mit geeignetem Beleuchtungsfeld eingesetzt werden. So sollen in einigen Anwendungen bei gegebenem Kamerasichtfeld maximale Arbeitsabstände erreicht werden. Bei schwierigen Oberflächeneigenschaften der erfassten Objekte hingegen, etwa Glanz oder Teiltransparenz, wird eher ein großer Überlappungsbereich von einzelnen Beleuchtungseinheiten benötigt. Somit muss für die Vielfalt an Anforderungen eine große Anzahl von TIR-Linsen vorgehalten werden, was einen entsprechenden Aufwand für die Entwicklung, Produktion, Lagerung und Verwaltung der optischen Komponenten verursacht. Eine Anpassung des Beleuchtungsfeldes im Feld ist ohne Austausch des Beleuchtungsmoduls nicht möglich.

Die DE 10 2008 014 349 B4 offenbart einen optischen Sensor mit einer Sendeoptik, in deren Konzentrator eine Lichtführung durch Totalreflexion an der Mantelfläche erfolgt. Aus der US 2006/0196944 A1 ist eine Beleuchtungsvorrichtung mit einer LED-Lichtquelle und einer den Winkelbereich einstellenden Linse bekannt, an deren äußerer Mantelfläche das Licht durch Totalreflexion geführt wird. Die Problematik der fehlenden Anpassungsmöglichkeiten für das entstehende Beleuchtungsfeld wird aber im Stand der Technik nicht angesprochen.

Es ist daher Aufgabe der Erfindung, eine auf TIR-Linsen basierende oder vergleichbare Beleuchtungsoptik zu verbessern.

Diese Aufgabe wird durch eine Beleuchtungsvorrichtung und ein Verfahren zum Erzeugen eines Beleuchtungsfeldes nach Anspruch 1 beziehungsweise 10 gelöst. Dabei geht die Erfindung von dem Grundgedanken aus, das Licht einer Lichtquelle durch eine Beleuchtungsoptik, insbesondere TIR-Linse, zu führen, deren Geometrie so beschaffen ist, dass das durch einen Lichteintrittsbereich in der Beleuchtungsoptik befindliche Licht hinreichend flach von innen auf die Mantelflächen fällt und so durch Totalreflexion weitergeführt und strahlgeformt wird, ehe es durch eine Lichtaustrittsfläche in Richtung Beleuchtungsfeld projiziert wird.

Um nun optische Eigenschaften und dadurch die Lichtverteilung in dem Beleuchtungsfeld, wie beispielsweise dessen Ausdehnung oder Lage, Helligkeit oder die Divergenz des projizierten Lichtbündels einzustellen, ist der Lichtführungsbereich beziehungsweise die TIR-Linse zumindest teilweise aus einem verformbaren Material hergestellt. Durch entsprechende Kraftausübung lässt sich deshalb der Lichtführungsbereich beziehungsweise die TIR-Linse, vorzugsweise reversibel oder elastisch verformen. Dadurch verändert sich die Geometrie der Mantelfläche, insbesondere deren Krümmung oder deren Winkel bezüglich einer Sichtlinie zur Lichtquelle und damit der Auftreff- und Reflexionswinkel des geführten Lichts. Abhängig vom Grad der Verformung wird so die Lichtverteilung des abgestrahlten Lichts eingestellt.

Die Erfindung hat den Vorteil, dass die Variantenvielfalt und dadurch Aufwand in Entwicklung, Produktion und Verwaltung reduziert wird. Es werden Einstellungsmöglichkeiten der optischen Eigenschaften der Beleuchtungsvorrichtung im Feld durch den Kunden oder Service ohne Austausch der Beleuchtungsvorrichtung geschaffen.

Das Material weist bevorzugt Silikon auf. Silikone haben die erforderlichen Verformbarkeits- und Elastizitätseigenschaften. So gibt es beispielsweise hyperelastische Silikone mit großer reversibler Dehnung, die zugleich inkompressibel sind. Letzteres bedeutet, dass durch Kraftausübung verdrängtes Material vollständig ausweichen muss und dadurch besonders effizient die Geometrie der Mantelfläche verändert.

Der Lichtführungsbereich weist bevorzugt mehrere Materialien mit unterschiedlichen elastischen Eigenschaften auf. Dabei sind sowohl Komposite als auch abschnittsweise verschiedene Materialien denkbar, die weich und stark verformbar bis hin zu hart und starr sein können. Dadurch kann noch besser und gezielter vorgegeben werden, wie der Lichtführungsbereich auf eine Kraftausübung reagiert, also eine jeweils gewünschte Verformung der Geometrie der Mantelfläche erreicht werden. Weichere oder besser verformbare Teilbereiche verändern dabei ihre Form schneller als härtere.

Die Beleuchtungsvorrichtung weist bevorzugt einen Aktuator auf, um eine radiale und/oder senkrechte Kraft auf den Lichtführungsbereich auszuüben. Eine senkrechte Kraft wird vorzugsweise mittelbar über den Lichteintrittsbereich oder den Lichtaustrittsbereich eingebracht. Diese Kraft drückt den Lichteintrittsbereich zusammen, so dass er verkürzt ist, und das zusammengedrängte verformbare Material weicht nach außen hin unter entsprechender Erweiterung der Mantelfläche aus. Eine radiale Kraft wirkt auf die Mantelfläche, die dadurch eingeschnürt, verengt oder verschoben wird.

Zumindest ein Abschnitt der Mantelfläche ist bevorzugt als Kegelstumpf geformt. Die Mantelfläche entspricht somit dem Kegelmantel. Eine senkrechte Kraft bewirkt hier eine Verkürzung, also eine Verringerung der Höhe des Kegels, und eine Vergrößerung des Öffnungswinkels in der fiktiven Kegelspitze. Dadurch wird der Winkel der inneren Totalreflexion flacher und das Beleuchtungsfeld größer. Eine Entlastung bewirkt die umgekehrte Verstellung der Beleuchtungsvorrichtung. Eine radiale Kraft krümmt die Mantelfläche, so dass der Kegelstumpf eingeschnürt wird, oder wirkt bei vollflächigem Angriff ähnlich wie eine senkrechte Kraft nur in Umkehrung der Rollen von Druck und Entlastung.

Zumindest ein Abschnitt der Mantelfläche ist bevorzugt als Paraboloid geformt. Während ein Kegel auf das Licht der Lichtquelle praktisch wie ein flacher Spiegel wirkt, bündelt ein Paraboloid das Licht zugleich wie ein Hohlspiegel. Auch andere Formen, wie Ellipsoide, Hyperboloide und Freiformflächen sind denkbar.

Der Lichteintrittsbereich weist bevorzugt eine Ausnehmung auf, in der die Lichtquelle angeordnet ist. Die Lichtquelle kann dadurch praktisch ein Stück in die Beleuchtungsoptik hineingeschoben werden, wo dann der Lichteintrittsbereich die Lichtquelle in einem großen Winkelbereich umgibt. Dadurch nimmt die Beleuchtungsoptik das Licht der Lichtquelle über einen großen Winkelbereich Abstrahlwinkel auf. Auch für eine nicht kollimierte Lichtquelle mit divergenter Abstrahlcharakteristik, beispielsweise eine LED mit großer Abstrahlfläche beziehungsweise großem Abstrahlwinkel wird daher das abgestrahlte Licht gezielt in den Beleuchtungsbereich geführt.

Der Lichteintrittsbereich ist bevorzugt zumindest teilweise konvex ausgebildet. Dieser konvexe Teilbereich liegt noch bevorzugter im Zentrum. Dadurch wird ein innerer Teil des Lichts der Lichtquelle strahlgeformt, das direkt ohne Totalreflexion an der Mantelfläche zu dem Lichtaustrittsbereich gelangt.

Der Lichtaustrittsbereich ist bevorzugt konvex ausgebildet. Damit trägt auch der Lichtaustrittsbereich mit zur Strahlformung bei. Vorzugsweise bildet der gesamte Lichtaustrittsbereich und nicht nur ein Teilbereich davon eine konvexe Kontur. Alternativ ist auch ein planer Lichtaustrittsbereich denkbar. Der Lichtaustrittsbereich kann zusätzlich strukturiert werden, etwa durch Aufrauen oder optische Mikroelemente wie Mikrolinsen, was dann beispielsweise als Diffusor oder Homogenisierer wirkt. Solche zusätzlichen Effekte sind auch durch das Nachordnen entsprechender optischer Elemente erreichbar.

In vorteilhafter Weiterbildung ist eine Kamera, insbesondere ein kamerabasierter Codeleser oder eine Kamera zur Inspektion oder Vermessung von Objekten, mit einem Bildsensor zur Aufnahme von Bilddaten, einer Auswertungseinheit zum Lesen von Codes oder Bestimmen von Objekteigenschaften aus den Bilddaten und einer erfindungsgemäßen Beleuchtungsvorrichtung vorgesehen. Diese Kamera bietet die Möglichkeit, das Beleuchtungsfeld variabel einzustellen und damit an verschiedene Anforderungen und Umgebungsbedingungen anzupassen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Kamera mit einer Beleuchtungsvorrichtung;
- Fig. 2: eine vergrößerte schematische Schnittdarstellung der Beleuchtungsvorrichtung mit innerer Totalreflexion gemäß Figur 1;
- Fig. 3: eine Ausführungsform einer Beleuchtungsvorrichtung mit verformbarem Lichtführungsbereich in Form eines Paraboloids; und
- Fig. 4: eine Ausführungsform einer Beleuchtungsvorrichtung mit verformbarem Lichtführungsbereich in Form eines Kegelstumpfes.

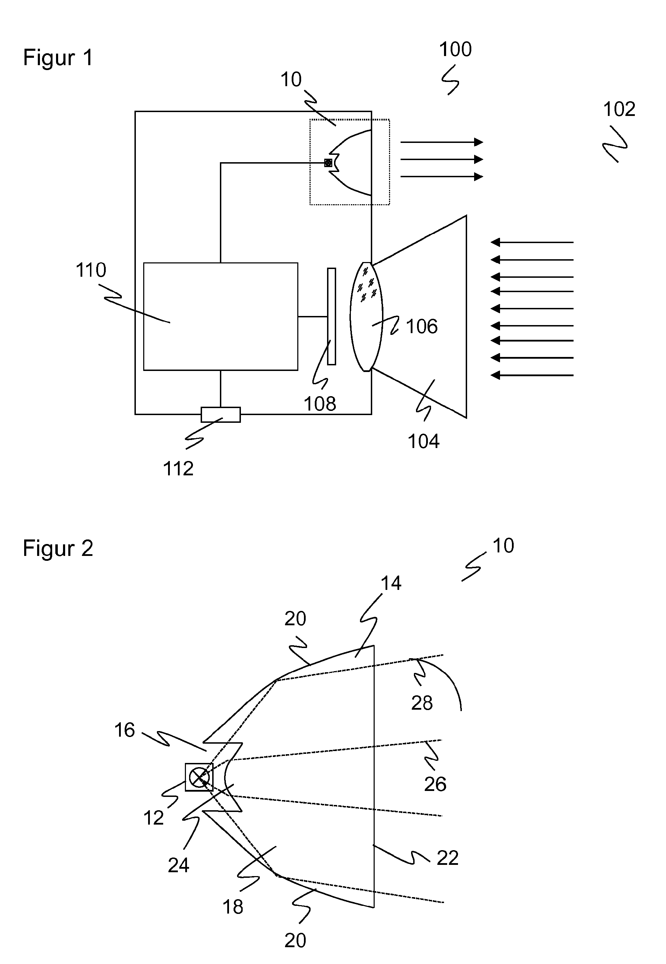

Figur 1 zeigt eine schematische Schnittdarstellung einer Kamera 10. Die Kamera 100 kann beispielsweise zur Vermessung oder Inspektion von Objekten sowie zum Erfassen von Codes und Auslesen von deren Inhalt eingesetzt werden. Die Kamera 100 ist mit einer Beleuchtungsvorrichtung 10 zum Ausleuchten eines Aufnahmebereichs 102 der Kamera 100 ausgerüstet, deren Aufbau weiter unten näher erläutert wird.

Die Kamera 100 erfasst Licht aus einem Aufnahmebereich 102 durch ein Aufnahmeobjektiv 104, in dem nur eine dargestellte Linse 106 die Aufnahmeoptik repräsentiert. Ein Bildsensor 108, beispielsweise ein CCD- oder CMOS-Chip mit einer Vielzahl von zu einer Zeile oder einer Matrix angeordneten Pixelelementen, erzeugt Bilddaten des Aufnahmebereichs 102 und der dort gegebenenfalls vorhandenen Objekte und Codebereiche und gibt diese an eine Auswertungseinheit 110 weiter. Die Auswertungseinheit 110 ist auf einem oder mehreren digitalen Bausteinen implementiert, beispielsweise Mikroprozessoren, ASICs, FPGAs oder dergleichen, die auch ganz oder teilweise außerhalb der Kamera 100 vorgesehen sein können, und steuert zugleich die Beleuchtungsvorrichtung 10.

Die Bilddaten werden in der Auswertungseinheit 110 verarbeitet, beispielsweise vorbereitend gefiltert, geglättet, helligkeitsnormiert, auf bestimmte Bereiche zugeschnitten oder binarisiert. Dann werden interessante Strukturen erkannt und segmentiert, beispielsweise einzelne Objekte, Linien oder Codebereiche. Diese Strukturen werden vermessen oder auf bestimmte Eigenschaften hin überprüft. Sofern Codes gelesen werden sollen, werden diese identifiziert und decodiert, also die in den Codes enthaltene Information ausgelesen.

An einem Ausgang 112 der Kamera 100 können Daten ausgegeben werden, und zwar sowohl Auswertungsergebnisse, wie gelesene Codeinformationen oder ermittelte Abmessungen und Inspektionsergebnisse, als auch Daten in verschiedenen Verarbeitungsstufen, wie Rohbilddaten, vorverarbeitete Bilddaten, identifizierte Objekte oder noch nicht decodierte Codebilddaten.

Figur 2 zeigt die einstellbare Beleuchtungsvorrichtung 10 in einer schematischen Schnittdarstellung. Eine Lichtquelle 12, beispielsweise eine LED, strahlt Licht in einem vergleichsweise großen Winkelbereich ab. Eine zugehörige Beleuchtungsoptik, dargestellt beispielhaft als TIR-Linse 14, dient als strahlführendes und strahlformendes Element. Die TIR-Linse 14 umfasst einen Lichteintrittsbereich 16, einen Lichtführungsbereich 18 mit einer Mantelfläche 20 und einen Lichtaustrittsbereich 22.

In der TIR-Linse 14 ist in dem Lichteintrittsbereich 16 eine Ausnehmung vorgesehen. Dadurch gelangt auch seitlich abgestrahltes Licht der Lichtquelle 12 in die TIR-Linse 14. In einem zentralen Bereich 24 ist der Lichteintrittsbereich 16 konvex geformt, um den inneren Teil 26 des eintretenden Lichts zu bündeln. Der Lichtaustrittsbereich 22 dagegen ist in der dargestellten Ausführungsform flach, wobei eine Strukturierung auf vergleichsweise kleinen Skalen vorgesehen sein kann.

Das Licht der Lichtquelle 12 gelangt somit, soweit es nur grob in Richtung der Beleuchtungsoptik abgestrahlt wird, in die TIR-Linse 14. Nach hinten abgestrahltes Licht einer praktisch gänzlich ungerichteten Lichtquelle 12 kann ein zusätzlicher, nicht dargestellter Reflektor in die TIR-Linse 14 zurückwerfen.

In der TIR-Linse 14 gelangt der innere Teil 26 des Lichtbündels, der bereits in die gewünschte Richtung zu dem Beleuchtungsfeld in dem Aufnahmebereich 102 abgestrahlt wurde, direkt zu der Lichtaustrittsfläche 22. Der äußere Teil 28 des Lichtbündels dagegen wird durch Totalreflexion an der Mantelfläche 20 geführt und erreicht somit ebenfalls das gewünschte Beleuchtungsfeld.

Lichtquelle 12 und TIR-Linse 14 sowie deren Geometrie geben das Beleuchtungsfeld und die Lichtverteilung innerhalb des Beleuchtungsfeldes vor. Um ein anderes Beleuchtungsfeld beziehungsweise eine andere Lichtverteilung zu erreichen, wird nun erfindungsgemäß der Lichtführungsbereich 18 verformt. Dadurch kann die Beleuchtungsvorrichtung 10 eingestellt werden, ohne sie austauschen zu müssen. Praktisch bedeutet eine Verformung des Lichtführungsbereichs 18 vorzugsweise eine Verformung der Beleuchtungsoptik beziehungsweise der TIR-Linse 14 selbst.

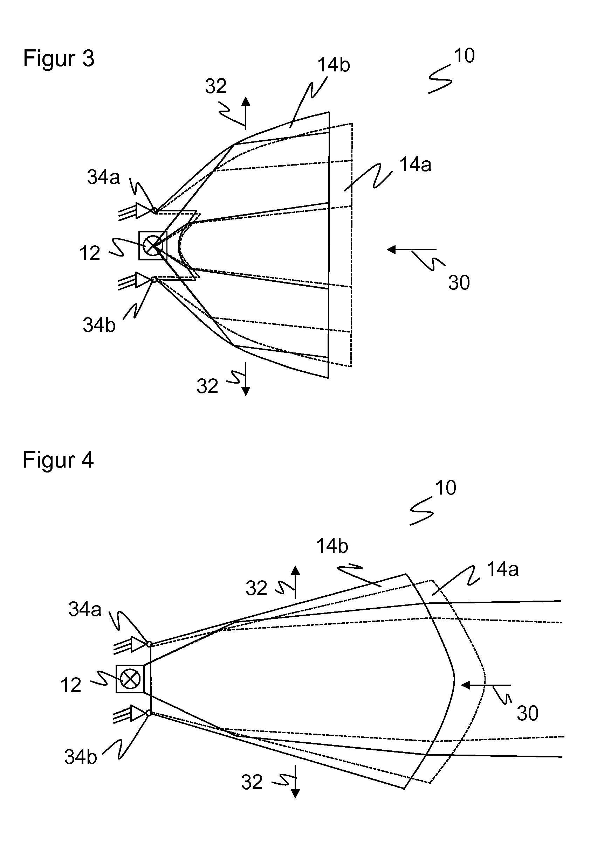

Figur 3 zeigt eine Ausführungsform einer Beleuchtungsvorrichtung 10 mit einer elastischen beziehungsweise teilweise elastischen TIR-Linse 14a-b. Der besseren Übersicht halber sind in Figur 3 Bezugszeichen für die verschiedenen Bereiche der TIR-Linse 14a-b weggelassen. Mit gestrichelten Linien ist die TIR-Linse 14a samt Strahlführung in einem undeformierten und mit durchgezogenen Linien die TIR-Linse 14b samt Strahlführung in einem deformierten Zustand dargestellt. Wie unmittelbar erkennbar, sorgt die Verformung der TIR-Linse 14a-b für eine entsprechende Veränderung der optischen Eigenschaften und somit des abgestrahlten Lichts, insbesondere eine Erweiterung oder Verengung des Abstrahlwinkels der Beleuchtungsvorrichtung 10 und damit des davon erzeugten Beleuchtungsfeldes.

Als elastisches Material für die TIR-Linse 14a-b wird beispielsweise Silikon eingesetzt. Dieses hat vorzugsweise hyperelastische Materialeigenschaften, wie große reversible Dehnung und Inkompressibilität. Um gezielte Formänderungen zu bewirken, die zu einer gewünschten Kontur der Mantelfläche 20 je nach Grad der Verformung führen, können auch mehrere Materialien verwendet werden. Dabei kann der Einsatz unterschiedlich harter Silikone beziehungsweise Polymere ohne hyperelastische Eigenschaften sinnvoll kombiniert werden.

Die Verformung wird durch äußere Krafteinwirkung erreicht. Das kann durch beliebige bekannte Aktoriken erreicht werden, beispielsweise einen manuellen Schraubmechanismus sowie elektromagnetische oder piezoelektrische Antriebe und künstliche Muskeln. Eine senkrechte Kraft auf die Lichtaustrittsfläche, wie durch den Pfeil 30 angedeutet, bewirkt ein Verkürzen der TIR-Linse 14a-b. Das Material muss ausweichen, und effektiv wirkt dadurch eine radiale Kraft, wie durch weitere Pfeile 32 gezeigt, welche die Mantelfläche 20 aufweitet. Ebenso ist denkbar, die radiale Kraft von außen aufzubringen und damit insbesondere gezielt auf bestimmte Abschnitte der Mantelfläche einzuwirken. In der gezeigten Ausführungsform ist die TIR-Linse 14a-b an ihrem Eintrittsbereich an einer Lagerung 34a-b fixiert. Das ist nur ein Beispiel, die Gegenkraft zu der von außen wirkenden Kraft kann an beliebiger anderer Stelle aufgebracht werden, damit die TIR-Linse 14a-b sich tatsächlich verformt und nicht einfach ausweicht. Dabei kann es nützlich sein, die Verformung mit einer Verschiebung oder Scherung zu kombinieren, um die Position des Beleuchtungsfeldes einzustellen.

Figur 4 zeigt eine weitere Ausführungsform einer Beleuchtungsvorrichtung 10 mit einer verformbaren TIR-Linse 14a-b. Die Darstellung entspricht mit gestrichelten Linien für einen undeformierten und durchgezogenen Linien für einen deformierten Zustand der Figur 4. Erneut sind Bezugszeichen für die verschiedenen Bereiche der TIR-Linse 14a-b zur besseren Übersicht weggelassen.

Die TIR-Linse 14a-b gemäß Figur 4 unterscheidet sich von Figur 3 darin, dass die Mantelfläche 20 hier die Geometrie eines Kegelstumpfes anstelle eines Paraboloids aufweist. Dadurch wird das Licht bei der Totalreflexion in dem Lichtführungsbereich 18 einfach gespiegelt und nicht mehr zugleich nach Art eines Hohlspiegels gebündelt. In Figur 4 ist außerdem die Lichtaustrittsfläche 22 konvex und nicht plan ausgebildet. Dadurch wird eine zusätzliche Strahlbündelung erreicht. Mischformen wie ein Kegelstumpf mit planer Lichtaustrittsfläche 22 oder ein Paraboloid mit konvexer Lichtaustrittsfläche 22 sind denkbar und nur Beispiele der zahlreichen möglichen Geometrien. Weitere Beispiele sind Ellipsoide, Hyperboloide oder Pyramidenstümpfe sowie Freiformen insbesondere mit abschnittsweisen Konturen unterschiedlichen Krümmungsverhaltens einschließlich gerader Abschnitte.

## Patentansprüche

1. Beleuchtungsvorrichtung (10) zum Erzeugen eines Beleuchtungsfeldes (102) für einen optoelektronischen Sensor (100), die mindestens eine Lichtquelle (12) und eine Beleuchtungsoptik (14) aufweist, insbesondere mit einer TIR-Linse (14), um das Licht der Lichtquelle (12) gezielt in das Beleuchtungsfeld (102) zu führen, wobei die Beleuchtungsoptik (10) einen Lichteintrittsbereich (16), einen Lichtführungsbereich (18) mit einer Mantelfläche (20) und einen Lichtaustrittsbereich (22) aufweist, so dass das Licht (26, 28) der Lichtquelle (12) in der Beleuchtungsoptik (14) über Totalreflexion an der Mantelfläche (20) von dem Lichteintrittsbereich (16) zu dem Lichtaustrittsbereich (22) geführt wird, **dadurch gekennzeichnet,**
**dass** der Lichtführungsbereich (18) zumindest teilweise aus einem verformbaren Material ausgebildet ist, so dass durch Ausüben einer Kraft auf den Lichtführungsbereich (18) die Geometrie der Mantelfläche (20) veränderbar ist.

2. Beleuchtungsvorrichtung (10) nach Anspruch 1,
wobei das Material Silikon aufweist.

3. Beleuchtungsvorrichtung (10) nach Anspruch 1 oder 2,
wobei der Lichtführungsbereich (18) mehrere Materialien mit unterschiedlichen elastischen Eigenschaften aufweist.

4. Beleuchtungsvorrichtung (10) nach einem der vorhergehenden Ansprüche, die einen Aktuator aufweist, um eine radiale und/oder senkrechte Kraft auf den Lichtführungsbereich (18) auszuüben.

5. Beleuchtungsvorrichtung (10) nach einem der vorhergehenden Ansprüche, wobei zumindest ein Abschnitt der Mantelfläche (20) als Kegelstumpf geformt ist.

6. Beleuchtungsvorrichtung (10) nach einem der vorhergehenden Ansprüche, wobei zumindest ein Abschnitt der Mantelfläche (20) als Paraboloid geformt ist.

7. Beleuchtungsvorrichtung (10) nach einem der vorhergehenden Ansprüche, wobei der Lichteintrittsbereich (16) eine Ausnehmung aufweist, in der die Lichtquelle (12) angeordnet ist.

8. Beleuchtungsvorrichtung (10) nach einem der vorhergehenden Ansprüche, wobei der Lichteintrittsbereich (16, 24) und/oder der Lichtaustrittsbereich (22) zumindest teilweise konvex ausgebildet ist.

9. Kamera (100), insbesondere kamerabasierter Codeleser oder Kamera zur Inspektion oder Vermessung von Objekten, mit einem Bildsensor (108) zur Aufnahme von Bilddaten, einer Auswertungseinheit (110) zum Lesen von Codes oder Bestimmen von Objekteigenschaften aus den Bilddaten und einer Beleuchtungsvorrichtung (10) nach einem der vorhergehenden Ansprüche.

10. Verfahren zum Anpassen von Beleuchtungseigenschaften einer Beleuchtungsvorrichtung (10) für einen optoelektronischen Sensor (100), wobei das Licht einer Lichtquelle (12) in einer Beleuchtungsoptik (14), insbesondere mit einer TIR-Linse (14), von einem Lichteintrittsbereich (16) durch Totalreflexion an einer Mantelfläche (20) eines Lichtführungsbereichs (18) zu einem Lichtaustrittsbereich (22) geführt wird,
**dadurch gekennzeichnet,**
**dass** auf den zumindest teilweise aus einem verformbaren Material ausgebildete Lichtführungsbereich (18) eine Kraft ausgeübt und dadurch die Geometrie der Mantelfläche (20) verändert wird.
